# EUROPEAN PATENT APPLICATION

(11) **EP 1 972 852 A2**
(43) Date of publication of application: **24.09.2008**
(21) Application number: 08152836.6
(22) Date of filing: 17.03.2008
(51) Int. Cl.: F23K 5/12, H01M 8/06

(54) **Continuous liquid fuel vaporizer**

(30) Priority: 22.03.2007 US 726545
(71) Applicant: Delphi Technologies, Inc., Troy, Michigan 48007 (US)
(72) Inventor: Weiss Amanda M., Livonia, NY 14487 (US); Salemi, Michael Raymond, Rochester, NY 14626 (US)
(74) Representative: Denton, Michael John

(57) **Abstract**

A tubular vaporizer for vaporizing volatile liquids, and especially hydrocarbon fuels. Liquid fuel is passed into the vaporizer tube, is vaporized by heat transferred through fuel contact with the hot walls, and vaporized fuel exits the vaporizer tube. A hot carrier air stream is passed through the vaporizer with the vaporized fuel, greatly reducing the rate of buildup of deposits on the vaporizer walls; however, fueling of the vaporizer eventually must be shut down to remove the deposits. The deposits are easily removed, and the vaporizer tube completely regenerated, by passing hot air alone through the tube for a period of time. In a preferred embodiment, two parallel-path vaporization tubes and switching means therebetween are provided for alternate use and regeneration cycles, affording a continuous flow of vaporized fuel from the apparatus. The vaporizer is especially useful in providing gaseous fuel for a catalytic hydrocarbon reformer.

## Description

### TECHNICAL FIELD

The present invention relates to apparatus and methods for vaporizing volatile liquid fuels; more particularly, to apparatus and methods for continuously vaporizing liquid hydrocarbon fuels; and most particularly, to a contact fuel vaporizer employing carrier air flow through, preferably, dual parallel vaporization tubes to permit periodic alternating cleaning of each tube during continuous operation of the vaporizer apparatus.

### BACKGROUND OF THE INVENTION

Hydrocarbon reformers for catalytically converting a gaseous hydrocarbon feed source into molecular hydrogen and carbon monoxide (resulting in a gas mixture known in the art as "reformate") are well known. One important known use for such a reformer is in providing a continuous reformate supply to a fuel cell assembly such as a solid oxide fuel cell stack.

In operating a reformer on a liquid hydrocarbon feedstock, an important process step is the vaporization of the liquid hydrocarbon into a gaseous hydrocarbon prior to entry of the feedstock into the reformer. In the prior art, providing a continuous flow of vaporized fuel has proved in practice to be rather difficult. In nearly every configuration of vaporization chamber, a buildup of non-volatile deposits eventually occurs on one or more surfaces, leading to increasingly impaired operation and eventual failure. Various approaches have been proposed to overcome this problem.

For example, it is known to introduce the liquid fuel into a vaporization chamber ahead of the reformer via an atomizing fuel injector similar to the fuel injector commonly used to inject combustion fuel into an internal combustion engine. Air entering the chamber to be mixed with the fuel is typically preheated, the intent being to vaporize the fuel before any droplets can reach a hot surface in the chamber. Repeated contact of liquid fuel with hot chamber walls can lead to the unwanted deposits just described. A problem with this approach is that the distances within such a vaporization chamber are very small, making it very difficult to assure that no buildup will occur.

For another example, a less-critical hot surface well ahead of the reformer, such as a heat-exchanging jacket, is deliberately presented, against which the fuel is impinged and vaporized. Deposits in such a pre-vaporizer may be of less consequence than in the chamber immediately preceding the reformer; however, such an arrangement still invites trouble over the longer term of operation.

What is needed in the art of liquid vaporization is a method and apparatus for continuous vaporization of a liquid without a progressive buildup of non-volatile material on walls of the vaporizing apparatus.

It is a principal object of the present invention to provide continuous vaporization of a liquid hydrocarbon over an indefinite period of time.

### SUMMARY OF THE INVENTION

Briefly described, a tubular vaporizer is heated from the outside, resulting in hot interior walls. Liquid fuel is passed into the tubular vaporizer and is vaporized by heat transferred through contact of the fuel with the hot interior walls. Vaporized fuel exits the tubular vaporizer. A stream of hot air is passed through the vaporizer as a carrier gas along with the vaporized fuel. The carrier air stream greatly reduces the rate of buildup of deposits on the vaporizer walls, compared to operation of the vaporizer without a carrier air stream; however, fueling of the vaporizer eventually must be shut down to remove deposits. The deposits are easily removed, and the vaporizer tube completely regenerated, by passing hot air alone through the tube for a period of time. In a preferred embodiment, two parallel-path vaporization tubes and switching means therebetween are provided for alternate use and regeneration cycles, affording a continuous flow of vaporized fuel from the apparatus.

The invention is especially useful in providing a continuous flow of vaporized hydrocarbon fuel to a catalytic hydrocarbon reformer, as in a fuel cell system.

### BRIEF DESCRIPTION OF THE DRAWINGS

The present invention will now be described, by way of example, with reference to the accompanying drawings, in which:
FIG. 1 is a schematic diagram of a contact liquid vaporizer assembly in accordance with the invention;
FIG. 2 is a graphic presentation of the comparative performance over time of both a prior art and a novel contact liquid vaporizer;
FIG. 3 is an isometric view of a catalytic hydrocarbon reformer equipped with a first embodiment (single tube) of a contact liquid vaporizer assembly in accordance with the invention; and
FIGS. 4 and 5 are schematic views of a second embodiment (dual tubes) of a contact liquid vaporizer assembly in accordance with the invention, showing alternating service cycles of the first and second vaporizer tubes.

Corresponding reference characters indicate corresponding parts throughout the several views. The exemplifications set out herein illustrate currently preferred embodiments of the invention, and such exemplifications are not to be construed as limiting the scope of the invention in any manner.

### DESCRIPTION OF THE PREFERRED EMBODIMENTS

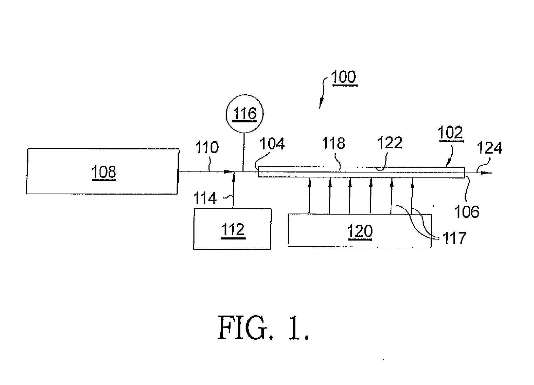

Referring to FIG. 1, a first embodiment 100 of a contact vaporizer assembly in accordance with the invention comprises a vaporizer tube 102 having an inlet 104 and an outlet 106, liquid injection means 108 for injecting a stream of a volatile liquid 110 into tube 102, air supply means 112 for injecting a carrier flow 114 of air into tube 102 either with or independently of liquid stream 110, and preferably a pressure sensing means 116 for determining back pressure at the tube inlet 104. Vaporizing of liquid 110 may be accelerated by application of heat 117 to an exterior surface 118 of tube 102 from a heat source 120, and by heating carrier air flow 114 by means (not shown) either ahead of or after air supply means 112.

Vaporizer tube 102 may be either linear or non-linear; in a presently preferred embodiment, tube 102 is helically coiled to provide greatest surface area in the shortest length of heat source 120. Tube 102 may be formed from any appropriate metal such as stainless steel or Inconel, or from glass or ceramic. Liquid injection means 108 is preferably a solenoid-actuated fuel injector similar to prior art fuel injectors well known in the automotive arts. Air supply means 112 is preferably a conventional air pump. Pressure sensing means 116 may be a simple visual gauge or a digital or analog transducer for integration into a digital control system (not shown) for assembly 100.

In operation, heat 117 from source 120 impinges on outer surface 118 of tube 102, thereby heating the inner wall 122 of tube 102. Volatile liquid to be vaporized is supplied from a source (not shown) into injection means 108 which injects stream 110, either continuously as by a pump or intermittently as by a pulsed automotive-type fuel injector. Liquid stream 110 enters tube 102 via inlet 104 and impinges on inner wall 122 whereupon liquid stream 110 is vaporized to form a gas stream. Concurrently, carrier air stream 114 from air source 112 enters tube 102 via inlet 104, mixes with the gas stream to form a gaseous fuel/air mixture 124 that exits tube 102 via outlet 106.

Deposits (not shown) of non-volatile materials, either dissolved in liquid stream 110 or decomposition products thereof, will form gradually on inner tube surface 122. The growth of deposits may be readily inferred by an increase in back pressure 116, which also indicates inversely a reduction in flow through tube 102. An important aspect of the present invention is the discovery that these deposits may be removed by stopping the flow of liquid material 110 and continuing flow of air through the heated tube 102 for a period of time.

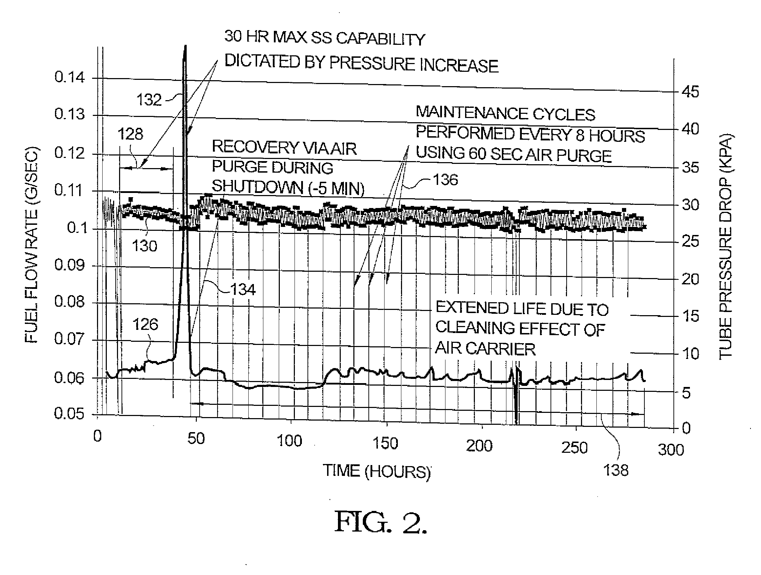

Referring now to FIG. 2, a chart of laboratory performance of first embodiment 100 is shown over time. The vaporizer tube is a 3/16" bore tube formed of Inconel. The carrier air flow is fixed at 0.1 g/s. The volatile liquid material to be vaporized is JP-8 jet fuel.

Tube pressure drop, corresponding to inlet back pressure, is shown at the right axis. Fuel flow rate is shown at the left axis. In operation, the tube back pressure 126 gradually increases over a period of about 30 hours 128 and flow rate 130 begins to decrease. Back pressure then increases precipitously 132 at just under 50 hours as deposits build up on the walls of the tube. At this point, fuel flow is interrupted and pure air is passed through the tube for 5 minutes. It is seen that this serves to regenerate completely the vaporizing characteristics 134 of the assembly when the original fuel and air flow rates are resumed: back pressure is reduced to about 5-6 kPa and flow rate again is about 0.10 g/s. Further, repeating 136 the regeneration procedure every 8 hours, with only a one-minute air purge, serves to allow the assembly to vaporize fuel virtually indefinitely 138.

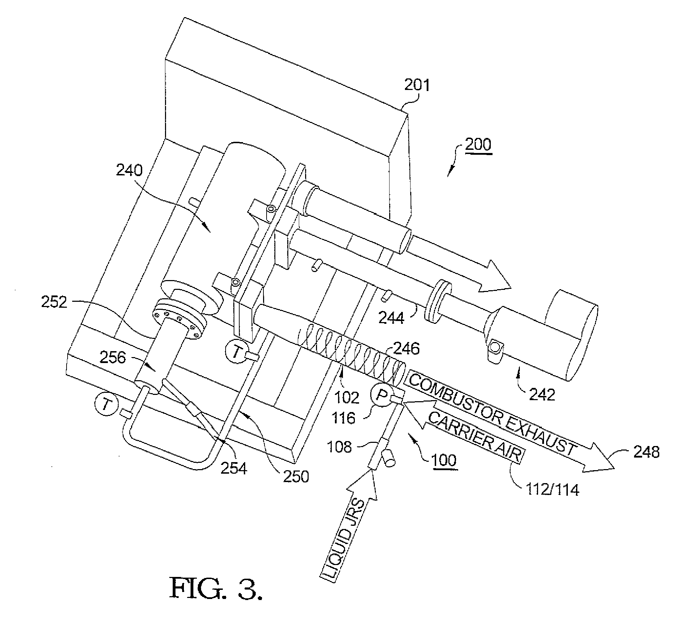

Referring to FIG. 3, an application 200 is shown of a contact vaporizer assembly 100 in accordance with the invention. Application 200 is a catalytic reformer assembly for reforming hydrocarbon fuel into reformate for supplying a fuel cell system (not shown) within an insulated enclosure 201.

A catalytic reactor 240 includes a jacket which is heated by exhaust from a fuel cell tailgas combustor 242. Combustor exhaust is fed to the reactor jacket via a feed tube 244 and is exhausted therefrom via an exhaust tube 246. The spent combustor exhaust 248 is still at an elevated temperature, typically about 500°C or higher.

Contact vaporizer assembly 100 is disposed in and adjacent to exhaust tube 246. Vaporizer tube 102 is configured as a helical coil disposed within exhaust tube 246, wherein a free heat source 120 is combustor exhaust 248. Fuel injector 108, carrier air source and flow 112/114, and pressure sensing means 116 are substantially as shown in FIG. 1. Vaporizer tube 102 is connected through a wall of combustor exhaust tube 246 to an insulated feed tube 250 leading to a mixing chamber 252 ahead of reactor 240. Heated air and recycle feed 254 are also injected into mixing chamber 252, and the resulting reformer feed mixture is passed into reactor 240. At start-up of the system, the mixture within the mixing chamber may be ignited by igniter 256 in known fashion to provide a burst of hot gases to rapidly warm the reactor to reforming temperature.

As is seen from the performance curves in FIG. 2, a contact vaporizer assembly in accordance with first embodiment 100 cannot supply vaporized fuel to reactor 240 on a continuous basis. Periodic shutdowns are required to regenerate the vaporizer tube. This clearly creates a very serious problem for a fuel cell system being supplied with reformate from reactor 240.

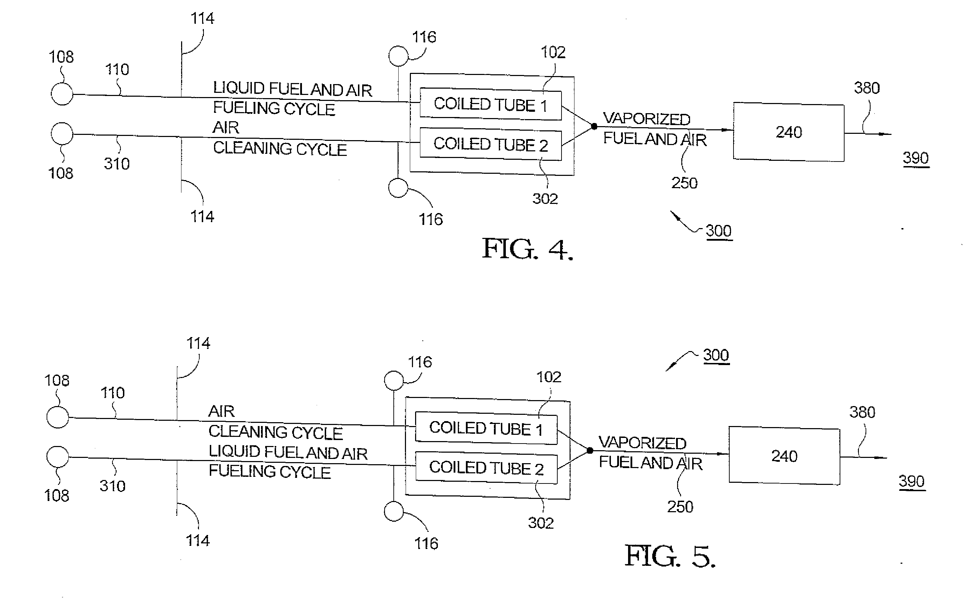

Referring to FIGS. 4 and 5, a currently-preferred second embodiment 200 capable of supplying gaseous fuel continuously is shown schematically. Second embodiment 300 comprises first and second vaporizer tubes 102,302 which, in an application such as reformer assembly 200, are coiled together as a double helix and are thus exposed to identical environments. Both tubes 102,302 are connected to feed tube 250. Preferably, each tube is provided with an inlet pressure sensing means 116. A switching means 360 is disposed in the flow paths of fuel flow 110 and air flow 114 ahead of and connected to tubes 102,302.

In operating configuration, as shown first in FIG. 4, first tube 102 (shown as Coiled Tube 1) is provided with fuel and carrier air as described above for providing a gaseous air/fuel mixture to reactor 240 (for then providing reformate 380 to, for example, a fuel cell stack 390). At the same time, additional air 314 is passed through second tube 302 (shown as Coiled Tube 2) in an air cleaning or regeneration cycle thereof. After a predetermined time interval, switching means 360 is activated and the functions of tubes 102,302 are exchanged such that first tube 102 begins an air cleaning or regeneration cycle by additional air 314 and second tube 302 begins providing a gaseous air/fuel mixture to reactor 240. The functions of tubes 102,302 are then alternated indefinitely, preferably according to a predetermined schedule, to provide a continuous stream of fuel/air mixture to reactor 240. Alternatively, the functions may be exchanged in response to back pressure signals from pressure sensing means 116 indicating that the tube currently in service is becoming clogged with deposits.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A method for vaporizing a volatile liquid material, comprising the steps of:
a) providing a tube having an inlet and an outlet;
b) applying heat to an outer surface of said tube;
c) injecting said volatile liquid material into said tube inlet; and
d) passing carrier air through said tube during said injecting step.

2. A method in accordance with Claim 1 comprising the further step of passing a mixture of said carrier air and a vaporized material from said tube outlet.

3. A method in accordance with Claim 2 comprising the further steps of:
a) stopping said injecting of volatile liquid; and
b) passing regenerating air through said tube after said stopping step, to clear deposits from said tube incurred during said injecting and passing air steps.

4. A method in accordance with Claim 1 wherein said carrier air is heated to a temperature above ambient prior to said step of passing air.

5. A method in accordance with Claim 1 wherein said volatile liquid material is a hydrocarbon.

6. A vaporizer assembly for vaporizing a volatile liquid material, comprising:
a) a first tube having an inlet and an outlet;
b) means for applying heat to an outer surface of said first tube;
c) means for injecting said volatile liquid material into said first tube inlet; and
d) means for passing carrier air through said first tube during said injecting step.

7. A vaporizer assembly in accordance with Claim 6 wherein said means for injecting includes a fuel injector.

8. A vaporizer assembly in accordance with Claim 6 wherein said means for passing carrier air includes an air pump.

9. A vaporizer assembly in accordance with Claim 6 further comprising means for measuring back pressure at said tube inlet.

10. A vaporizer assembly in accordance with Claim 6 further comprising:
a) a second tube having a second inlet and a second outlet;
b) means for applying heat to an outer surface of said second tube;
c) means for injecting said volatile liquid material into said second tube inlet;
d) means for passing carrier air through said second tube during said injecting step;
e) means for periodic switching the injecting of said volatile liquid in alternation between said first tube inlet and said second tube inlet;
f) means for stopping said injecting of volatile liquid material into either of said first and second tubes; and
g) means for passing regenerating air through either of said first and second tubes during such time as injecting of volatile liquid thereinto is stopped.

11. A catalytic hydrocarbon reformer for generating reformate by reforming hydrocarbon fuel, comprising:
a) a reforming chamber; and
b) a hydrocarbon fuel vaporizer assembly disposed ahead of said reforming chamber for vaporizing liquid hydrocarbon fuel to provide gaseous hydrocarbon fuel to said reforming chamber,
wherein said hydrocarbon fuel vaporizer assembly includes
a first tube having a first inlet, and a first outlet in communication with said reforming chamber,
a second tube having a second inlet, and a second outlet in communication with said reforming chamber,
means for applying heat to outer surfaces of said first and second tubes,
means for injecting said liquid hydrocarbon fuel into said first and second tube inlets,
means for passing air through said first and second tubes during said injecting step,
means for periodic switching the injecting of said volatile liquid in alternation between said first tube inlet and said second tube inlet,
means for stopping said injecting of volatile liquid material into either of said first and second tubes during said periodic switching, and
means for passing air through either of said first and second tubes when said injecting of volatile liquid thereinto is stopped.

12. A fuel cell system, comprising:
a) a fuel cell stack; and
b) a catalytic hydrocarbon reformer for supplying reformate to said fuel cell stack by reforming hydrocarbon fuel, wherein said catalytic hydrocarbon reformer includes
a reforming chamber and a hydrocarbon fuel vaporizer assembly disposed ahead of said reforming chamber for vaporizing liquid hydrocarbon fuel to provide gaseous hydrocarbon fuel to said reforming chamber, wherein said hydrocarbon fuel vaporizer assembly includes
a first tube having a first inlet, and a first outlet in communication with said reforming chamber,
a second tube having a second inlet, and a second outlet in communication with said reforming chamber,
means for applying heat to outer surfaces of said first and second tubes,
means for injecting said liquid hydrocarbon fuel into said first and second tube inlets,
means for passing air through said first and second tubes during said injecting step,
means for periodic switching the injecting of said volatile liquid in alternation between said first tube inlet and said second tube inlet,
means for stopping said injecting of volatile liquid material into either of said first and second tubes during said periodic switching, and
means for passing air through either of said first and second tubes when said injecting of volatile liquid thereinto is stopped.
